Europäisches Patentamt

(19) European Patent Office

Office européen des brevets

(11) Numéro de publication: **0 170 153**
**B1**

(12) **FASCICULE DE BREVET EUROPÉEN**

(45) Date de publication du fascicule du brevet:
**06.04.88**

(51) Int. Cl.⁴: **B 01 D 13/00**

(21) Numéro de dépôt: **85108871.6**

(22) Date de dépôt: **16.07.85**

(54) **Dispositif pour prélever la phase liquide d'une suspension.**

(30) Priorité: **17.07.84 FR 8411298**

(43) Date de publication de la demande:
**05.02.86 Bulletin 86/6**

(45) Mention de la délivrance du brevet:
**06.04.88 Bulletin 88/14**

(84) Etats contractants désignés:
**BE CH DE FR GB IT LI NL**

(56) Documents cité:
**EP-A-0 086 539**
**FR-A-1 482 987**
**FR-A-2 146 532**
**FR-A-2 513 536**
**US-A-3 788 470**

(73) Titulaire: **COMPAGNIE GENERALE D'ELECTRICITE**
**Société anonyme dite:, 54, rue La Boétie, F-75382**
**Paris Cedex 08 (FR)**

(72) Inventeur: **Galaj, Stanislas, 27 Avenue Lénine,**
**F-94110 Arcueil (FR)**

(74) Mandataire: **Weinmiller, Jürgen, Lennéstrasse 9**
**Postfach 24, D-8133 Feldafing (DE)**

EP 0 170 153 B1

LIBER, STOCKHOLM 1988

## Description

La présente invention concerne un dispositif pour prélever la phase liquide d'une suspension.

On connaît un dispositif pour prélever la phase liquide d'une suspension, d'un type comportant:

- une membrane microporeuse en forme de tube, disposée suivant un axe, les pores de cette membrane ayant une dimension inférieure à celle des particules solides de la suspension,

- un corps macroporeux dont les pores ont une dimension supérieure à celle des particules de la suspension, ce corps étant solidaire de la membrane et ayant une surface extérieure appliquée sur la surface intérieure de la membrane, la surface extérieure de la membrane étant en contact avec la suspension,

- et des moyens pour créer par rotation autour de l'axe, un écoulement tangentiel de la suspension par rapport à la membrane.

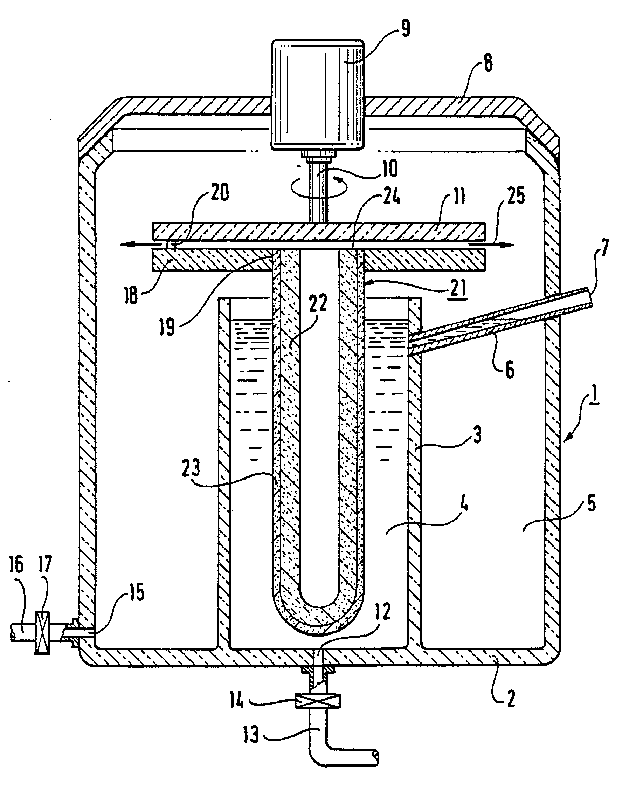

Un tel dispositif est décrit dans le brevet français 1 564 995 (voir notamment de la page 13, colonne de gauche, ligne 43, à la page 14, colonne de gauche, ligne 24, et figure 6). Dans ce dispositif, la suspension dont la phase liquide est à prélever est introduite sous pression dans un corps cylindrique 221 et mise en contact avec la surface extérieure d'une membrane constituée par un tissu filtrant 277 appliqué sur un grillage métallique cylindrique 270 disposé coaxialement à l'intérieur du corps 221. Ce dispositif comporte en outre une grille cylindrique 282 disposé coaxialement dans l'espace compris entre la membrane et le corps cylindrique, cette grille étant entraînée en rotation autour de l'axe afin de faire tourner la suspension par rapport à la membrane.

Un tel dispositif présente l'inconvénient d'être complexe et encombrant. En effet il nécessite des moyens de pompage pour introduire sous pression la suspension dans le corps cylindrique. De plus il nécessite des moyens de lavage sous pression à contre-courant pour éliminer les particules solides de la suspension qui s'accumulent sur l'extérieur de la membrane.

La présente invention a pour but de réaliser un dispositif compact et peu encombrant pour prélever la phase liquide d'une suspension.

Elle a pour objet un dispositif pour prélever la phase liquide d'une suspension, du type mentionné ci-dessus, caractérisé en ce que

- le tube formant la membrane est fermé à une première de ses extrémités et ouvert à sa deuxième extrémité, la membrane étant plongée partiellement dans la suspension de manière que la surface extérieure d'au moins ladite première extrémité soit en contact avec la suspension, ladite deuxième extrémité étant en dehors de la suspension

- et qu'il comporte en outre:

- un conduit capillaire dont la surface intérieure est mouillable par la phase liquide de la suspension, ce conduit comportant une première ouverture qui est reliée à une partie extrême du corps macroporeux située à ladite seconde extrémité du tube, le conduit comportant une deuxième ouverture débouchant en dehors de la suspension, une partie de la phase liquide de la suspension traversant par capillarité la membrane puis remplissant les pores du corps macroporeux et le volume intérieur du conduit capillaire,

- des moyens pour éjecter à travers la deuxième ouverture du conduit la phase liquide qui remplit le volume intérieur du conduit,

- et un récipient disposé en regard de la deuxième ouverture du conduit pour recueillir la phase liquide éjectée du conduit.

Selon un mode de réalisation de ce dispositif, le conduit est fixe par rapport à la membrane et disposé suivant un plan perpendiculaire à l'axe de la membrane de manière que la distance de ladite deuxième ouverture à l'axe de la membrane soit supérieure à la distance de cette membrane audit axe, et lesdits moyens pour créer par rotation autour de l'axe, un écoulement tangentiel de la suspension par rapport à la membrane sont des moyens pour entraîner le conduit en rotation autour de l'axe, cette rotation provoquant, par centrifugation, l'éjection, à travers la deuxième ouverture du conduit, de la phase liquide de la suspension qui remplit le volume intérieur du conduit. Dans ce mode de réalisation, le conduit capillaire peut comporter deux disques opposés, solidaires entre eux et disposés à faible distance l'un de l'autre parallèlement audit plan l'un des disques comportant une percée circulaire centrale constituant la première ouverture, la surface interne du conduit étant constituée par les surfaces planes les disques en regard l'une de l'autre, la deuxième ouverture étant constituée par la surface délimitant, à la périphérie des disques, l'espace compris entre ces surfaces planes.

Selon un autre mode de réalisation de ce dispositif, l'axe de la membrane est sensiblement perpendiculaire à la surface libre de la suspension.

Selon un autre mode de réalisation de ce dispositif, le corps macroporeux remplit tout le volume intérieur de la membrane.

Selon un autre mode de réalisation de ce dispositif, le corps macroporeux a une forme tubulaire fermée à une extrémité.

Selon un autre mode de réalisation de ce dispositif, la membrane et le corps macroporeux forment une seule pièce en céramique.

Selon un autre mode de réalisation de ce dispositif, lesdits moyens pour entraîner par rotation autour de l'axe un écoulement tangentiel de la suspension par rapport à la membrane sont des moyens pour entraîner la suspension en rotation par rapport à la membrane, et lesdits moyens pour éjecter à travers la deuxième ouverture du conduit la phase liquide qui remplit le volume intérieur du conduit comportent des moyens pour créer une depression gazeuse à la sortie du conduit capillaire.

Des formes particulières d'exécution de l'objet de la présente invention sont décrites ci-dessous, à titre d'exemple, en référence au dessin annexé dans lequel la figure unique représente un mode de réalisation du dispositif selon l'invention.

Sur cette figure, est représenté un récipient 1 cylindrique vertical en verre. Sur le fond 2 du récipient 1 est fixée une cloison intérieure cylindrique coaxiale 3 dont la hauteur est inférieure à celle de la paroi cylindrique extérieure du récipient 1. La cloison 3 divise donc le volume interne du récipient 1 en une chambre axiale 4 et une chambre périphérique 5 coaxiales. Un canal d'alimentation 6, débouchant à travers la paroi 3 dans la partie supérieure de la chambre 4, traverse la paroi cylindrique du récipient 1. Ce canal 6, sensiblement rectiligne, est incliné par rapport à l'horizontale de façon à permettre l'écoulement d'un liquide dans la chambre 4 à partir de l'extrémité libre 7 de ce canal.

La partie du fond 2 du récipient 1 qui délimite la chambre 4 comporte une percée 12 située sensiblement sur l'axe du récipient 1. Une canalisation de vidange 13 munie d'une vanne 14 est reliée à la percée 12. Une percée 15 est ménagée sur la paroi cylindrique extérieure du récipient 1 près du fond 2. Cette percée 15 communique avec une canalisation d'évacuation 16 munie d'une vanne 17.

Les bords l'un couvercle amovible 8 en acier inoxydable reposent sur l'extrémité supérieure de la paroi cylindrique extérieure du recipient 1 de façon à obturer son ouverture supérieure. La surface latérale d'un moteur électrique 9 est fixée dans une ouverture centrale du couvercle 8, de façon que l'arbre 10 du moteur 9 soit disposé verticalement à l'intérieur du récipient 1.

Un disque 11 en verre, disposé horizontalement au dessus du bord supérieur de la cloison 3, est fixé coaxialement sur l'extrémité libre le l'arbre 10. A une faible distance de la face plane du disque 11 opposée à l'arbre 10 est disposé coaxialement un autre disque 18 en verre, muni d'une ouverture centrale coaxiale 19. Le disque 18 est fixé au disque 11 par trois pattes de fixation telles que 20 disposées à 120° sur la surface périphérique des disques.

Dans l'ouverture 19 du disque 18, est fixée une extrémité d'un filtre désigné généralement par la référence 21. Le filtre 21 comporte un corps macroporeux 22 ayant la forme d'un tube fermé à une extrémité. Le corps 22 est par exemple constitué par de la céramique poreuse, la dimension des pores étant nettement supérieure à celle des particules solides de la suspension à filtrer. Sur toute la surface extérieure du corps 22 est plaquée la surface intérieure d'une membrane microproreuse 23 ayant également la forme d'un tube fermé à une extrémité. La membrane 23 est aussi réalisée en céramique poreuse et la dimension de ses pores est inférieure à celle des particules solides de la suspension à filtrer. De préférence, la membrane 23 et le corps 22 forment une seule pièce constituant le filtre 21. Comme il est visible sur la figure, le bord cylindrique de 12 membrane 23 situé du côté de l'ouverture du filtre tubulaire 21 est fixé coaxialement dans l'ouverture 19 du disque 18, tandis que l'extrémité inférieure fermée du filtre tubulaire 21 se trouve dans la chambre 4 à une faible distance du fond 2 du récipient 1.

Le dispositif décrit ci-dessus et illustré par la figure fonctionne de la manière suivante.

On met d'abord en marche le moteur 9 de façon à entraîner en rotation le disque 11 ainsi que la membrane 23 et le corps 22. On pose le couvercle 8 sur le bord du récipient 1 de façon que l'axe de la membrane soit sensiblement vertical. Puis on verse par l'extrémité 7 du canal 6, la suspension à filtrer dans l'espace le la chambre 4 compris entre la membrane 23 et la paroi 3. On crée ainsi un écoulement tangentiel de la suspension par rapport à la membrane dès que la suspension est en contact avec la membrane.

L'introduction de la membrane dans la suspension avant la mise en rotation de la membrane est déconseillée, car elle entraînerait un colmatage rapide le cette membrane.

Par capillarité, la phase liquide de la suspension traverse les pores de la membrane 23 et vient remplir les pores du corps macroporeux 22 jusqu'à son extrémité supérieure 24, tandis que les particules solides de la suspension restent à l'extérieur de la membrane.

Pour obtenir ce résultat, il faut que la vitesse de rotation soit inférieure à une vitesse limite qui créerait dans la suspension une force centrifuge s'opposant à l'aspiration capillaire à travers la membrane. Cette vitesse limite dépend du diamètre extérieur des disques 11, 18, de la dimension des pores de la membrane et lu corps macroporeux, et de la listance entre les disques 11, 18.

Les faces en regard les disques en verre 11 et 18 sont dépolies de manière à rendre ces faces mouillables par la phase liquide de la suspension. De plus, la distance entre ces faces est très faible, de façon à former entre elles un conduit capillaire plat dont l'entrée est constituée par l'ouverture 19 du disque 18 et dont la sortie est constituée par la surface délimitant, à la périphérie des disques, l'espace compris entre ces faces. La phase liquide de la suspension qui remplit les pores du corps macroporeux à son extrémité supérieure 24 se trouve à l'entrée de ce conduit et vient donc aussi remplir, par capillarité, l'espace capillaire compris entre les deux disques 11 et 18.

La rotation du conduit plat, entraînée par le moteur 9 provoque, par centrifugation, l'éjection radiale, suivant la flèche 25, de la phase liquide qui remplit le volume intérieur du conduit. Le diamètre extérieur du conduit plat doit nécessairement être supérieur à celui de la membrane tubulaire. La vitesse de rotation étant imposée par les conditions d'amorçage capillaire, il est possible d'augmenter la force d'aspiration sur la face interne de la membrane en augmentant le diamètre du conduis plat.

La phase liquide éjectée vient frapper la paroi du récipient 1 et s'écoule au fond de la chambre périphérique 5 de ce récipient. La phase liquide ainsi recueillie peut être extraite du dispositif par écoulement dans la canalisation 16 à travers la percée 15 après ouverture de la vanne 17. Le résidu de la suspension peut être évacué de la chambre 4 par la canalisation 13 à travers la percée 12, après ouverture de la vanne 14.

Le mouvement rotatif de la membrane par rapport à la suspension assure un écoulement tangentiel de cette suspension et permet, par effet de cisaillement et éventuellement de turbulence, de redistribuer les particules solides de la suspension de manière à maintenir une concentration en particules pratiquement homogène dans toute la suspension. Ainsi, il n'y a pas d'accumulation des particules sur la paroi extérieure de la membrane, ce qui permet d'éviter son colmatage.

L'amorçage de la filtration étant déclenché automatiquement par capillarité, il n'est généralement pas nécessaire de pressuriser la suspension en amont du dispositif. Il n'est pas nécessaire non plus de prévoir un système de décolmatage par lavage de la membrane à contrecourant.

Un avantage important du dispositif selon l'invention est sa compacité. En effet il comprend essentiellement d'une part un organe de filtrage comportant le filtre, le conduit d'éjection et le moteur d'entraînement et d'autre part un récipient de récupération qui peut être beaucoup plus petit que celui représenté sur la figure.

Un autre avantage du dispositif selon l'invention est le permettre de prélever la phase liquide d'une suspension de faible volume. Ce dispositif peut être ainsi utilisé pour le prélèvement d'échantillons liquides pour analyse, par exemple pour le prélèvement de sérum sanguin.

Mais il peut être aussi utilisé pour le filtrage de quantités plus importantes de suspension liquide, par exemple pour le filtrage de l'eau, en employant le mode de réalisation représenté sur la figure.

Bien entendu l'invention n'est nullement limitée à ce mode de réalisation qui n'a été donné qu'à titre d'exemple. En particulier, la suspension peut être entraînée en rotation autour de la membrane qui reste fixe: les moyens pour éjecter la phase liquide à travers la deuxième ouverture lu conduit peuvent comporter alors l'application d'une dépression gazeuse à la sortie du conduit capillaire.

De plus, le corps macroporeux peut avoir une forme générale cylindrique et remplir tout le volume intérieur de la membrane.

A titre indicatif, le corps macroporeux peut être réalisé en céramique, avoir un diamètre extérieur de 2 à 3 mm, une hauteur de 10 à 20 mm, et une porosité de 10 à 20 %, la dimension des pores étant de 10 à 20 micromètres. La membrane, également en céramique, peut avoir une épaisseur de 10 à 30 micromètres, une porosité de 30 à 40 % et une dimension de pores de 0,2 à 1 micromètre. La vitesse le rotation du filtre peut être le 3000 tours par minute environ. L'écartement entre les deux disques formant le conduit plat peut être de 10 à 100 micromètres.

**Revendications**

1. Dispositif pour prélever la phase liquide d'une suspension, comportant:
- une membrane microporeuse en forme de tube, disposée suivant un axe, les pores de cette membrane ayant une dimension inférieure à celle les particules solides le la suspension,
- un corps macroporeux dont les pores ont une dimension supérieure à celle des particules de la suspension, ce corps étant solidaire de la membrane et ayant une surface extérieure appliquée sur la surface intérieure de la membrane, la surface extérieure de la membrane étant en contact avec la suspension,
- et des moyens pour créer par rotation autour de l'axe, un écoulement tangentiel de la suspension par rapport a la membrane, caractérisé en ce que,
- le tube formant la membrane (23) est fermé à une première de ses extrémités et ouvert à sa deuxième extrémité, la membrane (23) étant plongée partiellement dans la suspension de manière que la surface extérieure d'au moins ladite première extrémité soit en contact avec la suspension, ladite deuxième extrémité étant en dehors de suspension,
- et qu'il comporte en outre;
- un conduit capillaire (11, 18) dont la surface intérieure est mouillable par la phase liquide de la suspension, ce conduit comportant une première ouverture (19) ou st reliée à partie extrême (24) du corps macroporeux (22) située à ladite seconde extrémité du tube, le conduit comportant une deuxième ouverture débouchant en dehors de la suspension, une partie de la phase liquide de la suspension traversant par capillarité la membrane (23) puis remplissant les pores du corps macroporeux (22) et le volume intérieur du conduit capillaire (11, 18),
- des moyens pour éjecter à travers la deuxième ouverture du conduit la phase liquide qui remplit le volume intérieur du conduit (11, 18)
- et un récipient (5) disposé en regard de la deuxième ouverture du conduit (11, 18) pour recueillir la phase liquide éjectée du conduit.

2. Dispositif selon la revendication 1, caractérisé en ce que:
- le conduit (11, 18) est fixe par rapport à la membrane (23) et disposé suivant un plan perpendiculaire à l'axe de la membrane de manière que la distance de ladite deuxième ouverture à l'axe de la membrane (23) soit supérieure à la distance le cette membrane (23) audit axe,
- et que lesdits moyens pour créer par rotation autour de l'axe, un écoulement tangentiel de la suspension par rapport à la membrane sont des moyens (9) pour entraîner le conduit en rotation autour de l'axe, cette rotation provoquant, par centrifugation, l'éjection, à travers la deuxième ouverture du conduit (11, 18), de la phase liquide de la suspension qui remplit le volume intérieur du conduit.

3. Dispositif selon la revendication 1, caractérisé en ce que l'axe de la membrane (23) est sensiblement perpendiculaire à la surface libre de la suspension.

4. Dispositif selon la revendication 1, caractérisé en ce que le corps macroporeux remplit tout le volume intérieur de la membrane (23).

5. Dispositif selon la revendication 1, caractérisé en ce que le corps macroporeux (22) a une forme tubulaire fermée à une extrémité.

6. Dispositif selon la revendication 1, caractérisé en ce que la membrane (23) et le corps macroporeux (22) forment une seule pièce en céramique.

7. Dispositif selon la revendication 2, caractérisé en ce que le conduit capillaire comporte deux disques (11, 18) opposés, solidaires entre eux et disposés à faible distance l'un de l'autre parallèlement audit plan, l'un (18) des disques comportant une percée circulaire centrale (19) constituant la première ouverture, la surface interne du conduit étant constituée par les surfaces planes des disques (11, 18) en regard l'une de l'autre, la deuxième ouverture étant constituée par la surface délimitant, à la périphérie des disques, l'espace compris entre ces surfaces planes.

8. Dispositif selon la revendication 1, caractérisé en ce que:
- lesdits moyens pour entraîner, par rotation autour de l'axe, un écoulement tangentiel de la suspension par rapport à la membrane sont des moyens pour entraîner la suspension en rotation par rapport à la membrane (23),
- et que lesdits moyens pour éjecter à travers la deuxième ouverture du conduit (11, 18) la phase liquide qui remplit le volume intérieur du conduit (11, 18) comportent des moyens pour créer une dépression gazeuse à la sortie du conduit capillaire (11, 18).

**Patentansprüche**

1. Vorrichtung zur Entnahme der flüssigen Phase einer Suspension, mit:
- einer rohrförmigen, mikroporösen, gemäß einer Achse angeordneten Membran, deren Poren kleinere Abmessungen besitzen als die festen Partikel der Suspension,
- einem makroporösen Körper, dessen Poren größere Abmessungen besitzen als die Partikel der Suspension, wobei der Körper fest mit der Membran verbunden ist und eine Außenfläche besitzt, welche an der Innenfläche der Membran anliegt, während die Außenfläche der Membran mit der Suspension in Berührung steht und:
- Mitteln zur Erzeugung einer tangentialen Strömung der Suspension gegenüber der Membran durch Rotation um die Achse, dadurch gekennzeichnet, daß:
- das die Membran (23) bildende Rohr an einem ersten Ende geschlossen und an seinem zweiten Ende offen ist, wobei die Membran (23) zum Teil in die Suspension eintaucht, derart, daß die Außenfläche zumindest des ersten Endes in Berührung mit der Suspension steht, während sich das zweite Ende außerhalb der Suspension befindet,
- und daß die Vorrichtung weiter ausgestattet ist mit:
- einem kapillaren Kanal (11, 18), dessen Innenfläche von der flüssigen Phase der Suspension benetzbar ist und der eine erste Öffnung (19) besitzt, die mit einer Endpartie (24) des makroporösen Körpers (22) am zweiten Ende des Rohres in Verbindung steht, wobei der Kanal eine zweite außerhalb der Suspension austretende Öffnung besitzt, und ein Teil der flüssigen Phase der Suspension die Membran (23) kapillar durchdringt, dann die Poren des makroporösen Körpers (22) sowie das Innere des kapillaren Kanals (11, 18) füllt,
- Mitteln zur Ausstoßung der flüssigen Phase, welche das Innere des Kanals (11, 18) füllt, durch die zweite Öffnung des Kanals, und:
- einem gegenüber der zweiten Öffnung des Kanals (11, 18) angeordneten Behälter (5) zum Auffangen der aus dem Kanal ausgestoßenen flüssigen Phase.

2. Vorrichtung nach Anspruch 1, dadurch gekennzeichnet, daß:
- der Kanal (11, 18) gegenüber der Membran (23) feststeht und in einer senkrecht zur Membranachse verlaufenden Ebene angeordnet ist, derart, daß der Abstand der zweiten Öffnung von der Achse der Membran (23) größer als der Abstand dieser Membran (23) von dieser Achse ist,
- und daß die Mittel zur Erzeugung einer Tangentialströmung der Suspensign bezüglich der Membran durch Rotation um die Achse Mittel (9) sind, mit denen der Kanal um seine Achse gedreht wird, wobei diese Drehung aufgrund der Zentrifugalkräfte den Ausstoß der flüssigen Phase der Suspension, die das Innenvolumen des Kanals erfüllt, durch die zweite Öffnung des Kanals (11, 18) bewirkt.

3. Vorrichtung nach Anspruch 1, dadurch gekennzeichnet, daß die Achse der Membran (23) im wesentlichen senkrecht zur freien Oberfläche der Suspension steht.

4. Vorrichtung nach Anspruch 1, dadurch gekennzeichnet, daß der makroporöse Körper den ganzen Innenraum der Membran (23) ausfüllt.

5. Vorrichtung nach Anspruch 1, dadurch gekennzeichnet, daß der makroporöse Körper (22) die Gestalt eines an einem Ende geschlossenen Rohres besitzt.

6. Vorrichtung nach Anspruch 1, dadurch gekennzeichnet, daß die Membran (23) und der makroporöse Körper (22) ein einziges Stück aus Keramik bilden.

7. Vorrichtung nach Anspruch 2, dadurch gekennzeichnet, daß der kapillare Kanal zwei einander gegenüberstehende Scheiben (11, 18) umfaßt, die fest zueinander stehen und mit einem kleinen gegenseitige Abstand parallel zu der genannten Ebene liegen, wobei eine (18) der Scheiben eine kreisförmige, zentrale Bohrung (19) aufweist, welche die erste Öffnung bildet, die innere Oberfläche des Kanals durch die ebenen, einander gegenüberstehenden Flächen der Scheiben (11, 18) gebildet wird, und die zweite Öffnung durch die Oberfläche gebildet wird, welche an der Peripherie der Scheiben den Raum zwischen den ebenen Flächen begrenzt.

8. Vorrichtung nach Anspruch 1, dadurch gekennzeichnet, daß:
- die Mittel zur Erzeugung einer tangentialen Strömung der Suspension relativ zur Membran durch Rotation um die Achse Mittel sind, welche die Suspension in Rotation zur Membran (23) versetzen, und:
- die Mittel zum Ausstoßen der flüssigen Phase, die das Innere des Kanals (11, 18) füllt, durch die zweite Öffnung des Kanals Mittel umfassen, welche einen Gasunterdruck am Ausgang des kapillaren Kanals (11, 18) erzeugen.

## Claims

1. A device for removing the liquid phase from a suspension, comprising:
- a microporous tube-shaped membrane disposed along an axis, the pores of said membrane having a size smaller than that of the solid particles in the suspension,
- a macroporous body having pores of a size larger than that of the particles in the suspension, the body being fixed to the membrane and having an outer surface applied to the inner surface of the membrane, the outer surface of the membrane being in contact with the suspension, and:
- means for creating a tangential flow of the suspension relative to the membrane by rotation about said axis, characterized in that:
- the membrane-forming tube (23) is closed at a first of its ends and is open at its second end, the membrane (23) being partially immersed in the suspension in such a manner that the outer surface of at least the first end is in contact with the suspension, whereas the second end is outside the suspension,
- and that the device further includes:
- a capillary duct (11, 18) whose inner surface may be wetted by the liquid phase of the suspension, the duct comprising a first opening (19) which is in connection with an end portion (24) of the mcroporous body (22) situated at said second end of the tube, the duct including a second opening ending outside the suspension, a portion of the liquid phase of the suspension passing through the membrane (23) by capillarity and then filling the pores of the macroporous body and the inside volume of the capillary duct (11, 18),
- means for ejecting the liquid phase which fills the inside volume of the duct (11, 18) via the second opening of the duct, and:
- a receptacle (5) facing the second opening of the duct (11, 18) for receiving the liquid phase ejected therefrom.

2. A device according to claim 1, characterized in that:
- the duct (11, 18) is stationary relative to the membrane (23) and is disposed in a plane perpendicular to the membrane axis in such a manner that the distance of the second opening from the axis of the membrane (23) is greater than the distance of the membrane (23) from said axis,
- and that said means for creating a tangential flow of the suspension relative to the membrane by rotation about the axis are means (9) for rotating the duct about the axis, said rotation causing the liquid phase of the suspension filling the inside volume of the duct to be ejected by centrifugation through the second opening of the duct (11, 18).

3. A device according to claim 1, characterized in that the axis of the membrane (23) is substantially perpendicular to the free surface of the suspension.

4. A device according to claim 1, characterized in that the macroporous body occupies the entire inside volume of the membrane (23).

5. A device according to claim 1, characterized in that the macroporous body (22) is tubular in shape and closed at one end.

6. A device according to claim 1, characterized in that the the membrane (23) and the macroporous body (22) are constituted by a single ceramic part.

7. A device according to claim 2, characterized in that the capillary duct comprises two opposed parallel disks (11, 18) fastened to each other and disposed parallelly to said plane at a small distance from one another, one of the disks (18) including a central circular bore (19) constituting said first opening, the inside surface of the duct being constituted by the facing plane surfaces of the disks (11, 18), and the second opening being constituted by the surface delimiting the space between said plane surfaces around the periphery of the disks.

8. A device according to claim 1, characterized in that:
- said means for causing the suspension to flow tangentially relative to the membrane by rotation about the axis are means for causing the suspension to rotate relative to the membrane (23), and:
- said means for ejecting the liquid phase, which fills the inside volume of the duct (11, 18), via the second opening of the duct (11, 18) comprise means for setting up a depression at the output of the capillary duct (11, 18).